# EUROPEAN PATENT APPLICATION

(11) **EP 0 673 144 A2**
(43) Date of publication of application: **20.09.1995**
(21) Application number: 95103492.5
(22) Date of filing: 10.03.1995
(51) Int. Cl.: H04M 3/42, H04Q 3/47, H04M 3/48, H04Q 3/72

(54) **Call registration system for personal communication services**

(30) Priority: 16.03.1994 JP 71377/94
(71) Applicant: FUJITSU LIMITED, Kawasaki-shi, Kanagawa 211 (JP)
(72) Inventor: Iida, Ichiro, c/o FUJITSU LIMITED, Kawasaki-shi, Kanagawa 211 (JP); Etoh, Fumiharu, c/o FUJITSU KYUSHU COMM. SYS. LTD., Hakata-ku, Hakata-shi, Fukuoka (JP); Kuwahara Soichi, c/o FUJITSU KYUSHU COMM. SYS. LTD, Hakata-ku, Hakata-shi, Fukuoka (JP)
(74) Representative: Lehn, Werner, Dipl.-Ing.

(57) **Abstract**

A call registration system for personal communication services, which provides, at the switching side, a personal number registered location managing unit (100) for managing the communication terminals for which personal numbers are registered as being located at, personal number call registering unit (200) for receiving requests for registration and registering a call origin personal number A with respect to a call destination personal number B as call information, and personal number call registration notifying unit (300) for notifying information pertaining to a registered call origin personal number to a registered location communication terminal of the call destination personal number obtained by searching through the managing unit and provides, at the communication terminals, a call origin information memory unit (300) for storing information pertaining to call origin personal numbers which have been notified as registered and call origin information display unit (600) for displaying information pertaining to the call origin personal numbers. By this, a call registration service dealing with personal numbers is provided.

## Description

### BACKGROUND OF THE INVENTION

### 1. Field of the Invention

The present invention relates to a call registration system in a switching system which provides personal communication services using personal numbers designating specific individuals, more particularly to a call registration system which is able to provide a call registration function dealing with personal numbers rather than communication terminals and an automatic call-back function coping with such call registration function.

### 2. Description of the Related Art

Existing switching systems already provide a call registration service for calls received while a party is on the line or has registered himself or herself as absent and an automatic call-back service for such calls, but these deal with the communication terminals accommodated in the switching system. That is, they register and manage them as terminals originating the registered calls and terminals for receiving the registered calls and therefore provide these services vis-a-vis communication terminals.

As will be explained in further detail later with reference to the drawings, in such existing systems of call registration dealing with communication terminals, the call registering means, call registration notifying means, call registration canceling means, number memory means, number display means, and call-back means all deal with communication terminals.

In a switching system which provides personal communication services using personal numbers, the subscribers with personal numbers are not limited to using fixed communication terminals which they are registered as being located at, but can use any communication terminals. Therefore, a party could not be sure of reaching the personal number subscriber at the communication terminal which he or she registered a call for. Further, when calling back a party based on the call registration information, one could not be sure of reaching the party which registered the call.

Accordingly, in the past, there was the problem, first, that when a party registering a call changed the communication terminal he or she was registered as being located at or moved to another location and used another communication terminal while the call was registered, the party for which the call was registered (callee) could not reach the caller, that is, the party registering the call, if calling back the communication terminal from which the call was originated based on the call registration information. Also, second, if the party for which the call was registered changed the communication terminal he or she was registered as being located at or moved to another location and used another communication terminal, the party for which the call was registered could not access the call registration information for the communication terminal before the change or move and as a result the effectiveness of the service was reduced.

For the first of these problems, it is possible to make use of a combination of a function of registering calls (for example, the "Call Memory System" of Japanese Unexamined Patent Publication (Kokai) No. 57-160250, the "Control System for Non-Response" of Japanese Unexamined Patent Publication (Kokai) No. 62-60346, the "Intra-Office Telephone System" of Japanese Unexamined Patent Publication (Kokai) No. 1-99356, etc.) and the function of transferring calls to a communication terminal at another location, but this required information be set at the originating communication terminal or the communication terminal at the other location by entering a special transfer number etc. and therefore was not necessarily an effective means of resolution. There was no effective means for solving the second problem.

### SUMMARY OF THE INVENTION

The present invention was made in consideration of these problems and has as its object the provision of a function for registering calls dealing not with the communication terminals, but with personal numbers designating specific individuals, and an automatic call-back function coping with the same, in a switching system providing personal communication services.

To attain the above object, the present invention (1) provides at the switching side personal number registered location managing means for managing the communication terminals for which personal numbers are registered as being located at, personal number call registering means for receiving requests for registration and registering a call origin personal number A with respect to a call destination personal number B as call information, and personal number call registration notifying means for notifying information pertaining to a registered call origin personal number to a registered location communication terminal of the call destination personal number obtained by searching through the managing means and (2) provides at the communication terminals call origin information memory means for storing information pertaining to call origin personal numbers which have been notified as registered and call origin information display means for displaying information pertaining to the call origin personal numbers. By this, a call registration service dealing with personal numbers is provided.

### BRIEF DESCRIPTION OF THE DRAWINGS

The above object and features of the present invention will be more apparent from the following description of the preferred embodiments with reference to the accompanying drawings, wherein:
Fig. 1 is a view explaining the principle of the present invention;
Fig. 2 is a view of the call registration system for personal communication services according to an embodiment of the present invention;
Figs. 3A and 3B are views of the block configuration of key portions of the present invention in a switch in an embodiment of the call registration system;
Fig. 4 is a view of the block configuration of key portions according to the present invention in a communication terminal in an embodiment of the call registration system;
Figs. 5A and 5B are flow charts of the processing of a terminal status managing unit in an embodiment of the call registration system;
Figs. 6A and 6B are flow charts of the processing of a personal number registered location managing unit in an embodiment of the call registration system;
Figs. 7A and 7B are flow charts of the processing of a personal number status managing unit in an embodiment of the call registration system;
Fig. 8 is a flow chart of the processing of a personal number call registering unit in an embodiment of the call registration system;
Figs. 9A and 9B are flow charts of the processing of a personal number call registration notifying unit in an embodiment of the call registration system;
Fig. 10 is a flow chart of the processing of a personal number call registration canceling unit in an embodiment of the call registration system;
Fig. 11 is a flow chart of the processing in a personal number call-back unit in an embodiment of the call registration system;
Figs. 12A and 12B are views for explaining the structure of data in a terminal status managing region and personal number status managing region in an embodiment of the call registration system;
Figs. 13A and 13B are views for explaining the structure of data in a personal number registered location region and personal number call registration region in an embodiment of the call registration system;
Fig. 14 is a view explaining the structure of data in a personal number information managing region in an embodiment of the call registration system;
Fig. 15 is a view explaining the structure of data in a personal number call memory region in an embodiment of the call registration system; and
Fig. 16 is a view of a conventional call registration system dealing with communication terminals.

### DESCRIPTION OF THE PREFERRED EMBODIMENTS

Before describing the embodiments of the present invention, the related art and the disadvantages therein will be described with reference to the related figures.

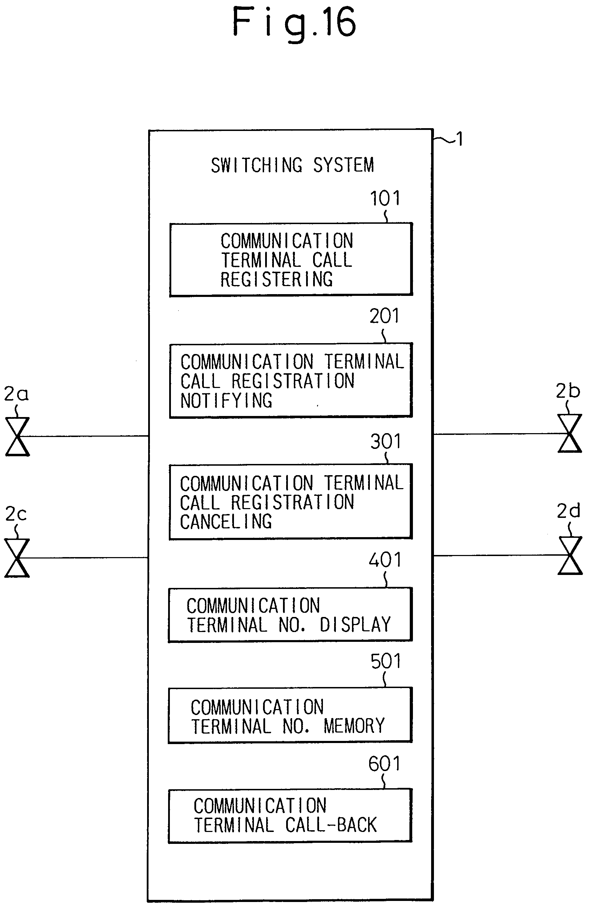

Figure 16 is a view of an example of a call registration system dealing with communication terminals in the related art explained above. The call registering means 101, call registration notifying means 201, call registration canceling means 301, number memory means 401, number display means 501, and call-back means 601 all deal with communication terminals.

In such a conventional call registration system, the problems explained above occurred. That is, when a party registering a call (caller) changed the communication terminal he or she was registered as being located at or moved to another location and used another communication terminal while the call was registered, the party for which the call was registered (callee) could not reach the caller, that is, the party registering the call, if calling back the communication terminal from which the call was originated based on the call registration information. Also, if the party for which the call was registered changed the communication terminal he or she was registered as being located at or moved to another location and used another communication terminal, the party for which the call was registered could not access the call registration information for the communication terminal before the change or move and as a result the effectiveness of the service was reduced.

The present invention was made in consideration of these problems and provides a function for registering calls dealing not with communication terminals, but with personal numbers designating specific individuals, and an automatic call-back function coping with the same, in a switching system providing personal communication services.

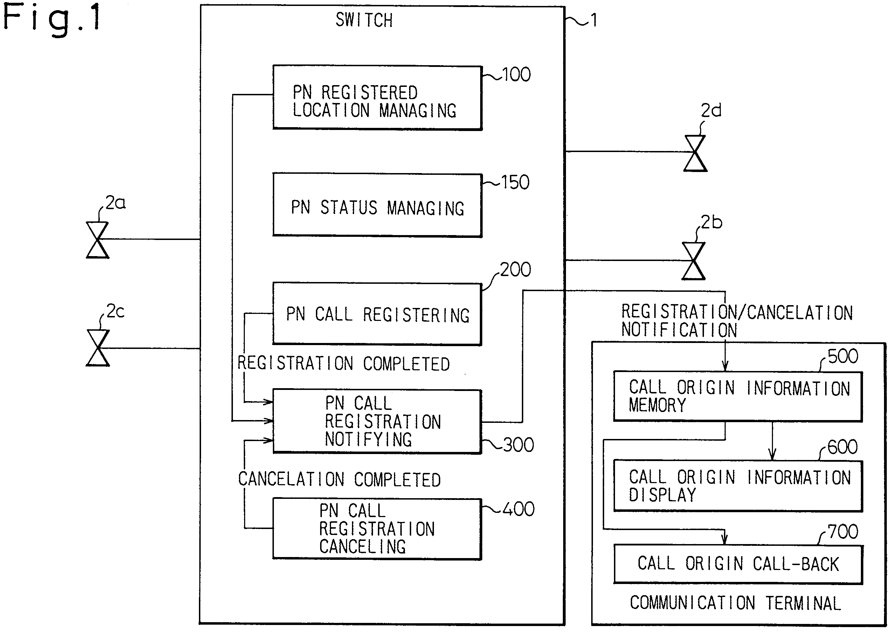

Figure 1 is a view explaining the principle of the present invention.

According to a first embodiment, the call registration system for personal communication services according to the present invention
(1) provides, at the switching side, personal number registered location managing means 100 for managing information on communication terminals for which personal numbers are registered as being located at, personal number call registering means 200 for receiving requests for registration and registering a call origin personal number A with respect to a call destination personal number B as call information, and personal number call registration notifying means 300 for notifying information pertaining to a registered call origin personal number to a registered location communication terminal of the call destination personal number, obtained by searching through the managing means and
(2) provides, at the communication terminals, call origin information memory means 500 for storing information pertaining to call origin personal numbers which have been notified as registered and call origin information display means 600 for displaying information pertaining to the call origin personal numbers.

The call registration system of the first embodiment operates as follows: The personal number registered location managing means 100 manages the numbers of the communication terminals for which personal numbers have been registered as located at with respect to the personal numbers, for example, a personal number A of a personal number subscriber A is registered as located at the communication terminal 2a and the personal number B of the personal number subscriber B is registered as being located at the communication terminal 2b. A personal number status managing means 150 manages the status of the personal numbers (idle, busy, absent, rejecting calls, etc.)

When for example a personal number subscriber A calls the personal number B of personal number subscriber B from a communication terminal 2a, but the subscriber B is on the line, does not answer, etc. and therefore the call cannot be completed to the personal number B, if the personal number call registering means 200 receives a request for registration from the call origin personal number subscriber A as a result of a predetermined call registration operation, it registers the call from the call origin personal number A with respect to the call destination personal number B and notifies the same to the personal number call registration notifying means 300.

When receiving the notification of call registration from the personal number call registering means 200, the personal number call registration notifying means 300 extracts from the personal number registered location managing means 100 the call destination personal number B and its registered location communication terminal 2b and notifies the registration of the personal number call to the communication terminal 2b along with information pertaining to the call origin personal number A (for example, the call destination personal number, call origin personal number, personal identification information, etc.)

At the registered location communication terminal of the call destination personal number B, the call origin information (A) memory means 500 receives and registers the information pertaining to the call origin personal number A notified as being registered by the personal number call registration notifying means 300. The call origin information display means 600 then displays the information pertaining to the call origin personal number stored in the call origin information memory means 500 on a liquid crystal display etc.

This enables the information pertaining to the call origin personal number A to be recorded and displayed at the registered location communication terminal 2b of the call destination personal number B and notification of the history of the call from the personal number A to the personal number B.

According to a second embodiment, the call registration system is further provided with personal number call registration canceling means 400 for deleting the call information registered by the personal number call registering means 200 when receiving a request for cancelation of registration by a predetermined cancelation operation. In this case, the personal number call registration notifying means 300 notifies the registered location communication terminal of the call destination personal number of the deletion of the information pertaining to the call origin personal number with respect to the call information deleted by the personal number call registration canceling means 400, and the call origin information memory means 500 deletes the information pertaining to the call origin personal number for which deletion was notified by the personal number call registration notifying means 300.

According to the second embodiment, when a party performs a predetermined operation to cancel a call registration, the personal number call registration canceling means 400 deletes the call registration of the call origin personal number A with respect to the call destination personal number B made by the personal number call registering means 200 and notifies the deletion of the call registration to the personal number call registration notifying means 300. For example, registration is deleted when a call-back is made or when a call-back becomes unnecessary.

When notification of cancellation of a call registration is received from the personal number call registration canceling means 400, the personal number call registration notifying means 300 extracts, by the personal number registered location managing means 100 the registered location communication terminal 2b of the call destination personal number B with respect to the call whose registration was canceled and notifies the registered location communication terminal 2b of the cancelation of the call registration.

At the communication terminal receiving notification of cancelation of call registration, when receiving notification of cancelation of call registration from the personal number call registration notifying means 300, the call origin information memory means 500 deletes the information pertaining to the call origin personal number with respect to the call registration. In this way, it is possible to delete stored call registration information as needed.

According to a third embodiment, when there is a change in the registered location communication terminal of the call origin personal number in the personal number registered location managing means 100, the personal number call registration notifying means 300 notifies the previous registered location communication terminal, of before the change of the call origin personal number, of the deletion of information pertaining to the registered call origin personal number and notifies the new registered location communication terminal, of after the change, of the information pertaining to the registered call origin personal number.

According to the third embodiment, when detecting that a subscriber of a personal number A registered as located at a communication terminal 2a has performed an operation to register his or her location at another communication terminal 2c, the personal number registered location managing means 100 changes the registered location communication terminal of the personal number A from the communication terminal 2a to the communication terminal 2c. Similarly, when detecting that a subscriber of a personal number B registered as located at a communication terminal 2b has performed an operation to register his or her location at another communication terminal 2d, it changes the registered location communication terminal of the personal number B from the communication terminal 2b to the communication terminal 2d. In this way, it manages the registered location communication terminals of the personal numbers. Further, if a call is registered for a personal number B changed in registered location to another communication terminal, it notifies the change of the destination of the notification of the call registration.

When receiving a notification of change from the personal number registered location managing means 100 and detecting there has been a change in the registered location communication terminal of the call destination personal number B, the personal number call registration notifying means 300 notifies the registered location communication terminal 2b of the personal number B, of before the change, of the deletion of the stored call registration and notifies the registered location communication terminal 2d, of after the change, of the call registration (2d) along with information pertaining to the stored call origin personal number.

Accordingly, even if the registered location communication terminal is changed in personal communication services, it becomes possible to register a call for the personal number at the changed communication terminal.

According to a fourth embodiment, the call registration system provides, at the communication terminals 2, call origin call-back means 700 for automatically dialing and calling back the call origin personal number using personal identification display information selected or personal identification information stored in the call origin information memory means 500 when the party to be called back is selected based on the display information of call origin personal numbers by the call origin information display means 600.

According to the fourth embodiment, when a party selects a party to be called back from among several sets of call origin personal identification information displayed by the call origin information display means 600 and performs a predetermined call operation, the call origin call-back means 700 extracts the information pertaining to the call origin personal number A stored in the call origin information memory means 500 with respect to the personal identification information selected and automatically dials the number for the call origin personal number A to call it back. Accordingly, it becomes possible to provide a call-back function to the origin of the call registration (caller) corresponding to a personal number in personal communication services.

According to a fifth embodiment, the call origin call-back means 700 is constructed to request cancelation of the call registration after calling back the call origin personal number.

According to the fifth embodiment, when calling back the call origin personal number, the call origin call-back means 700 requests cancelation of the call registration at the personal number call registration canceling means 400 etc. This enables automatic cancelation of the call registration after a call-back.

The present invention will now be explained in further detail with reference to detailed examples.

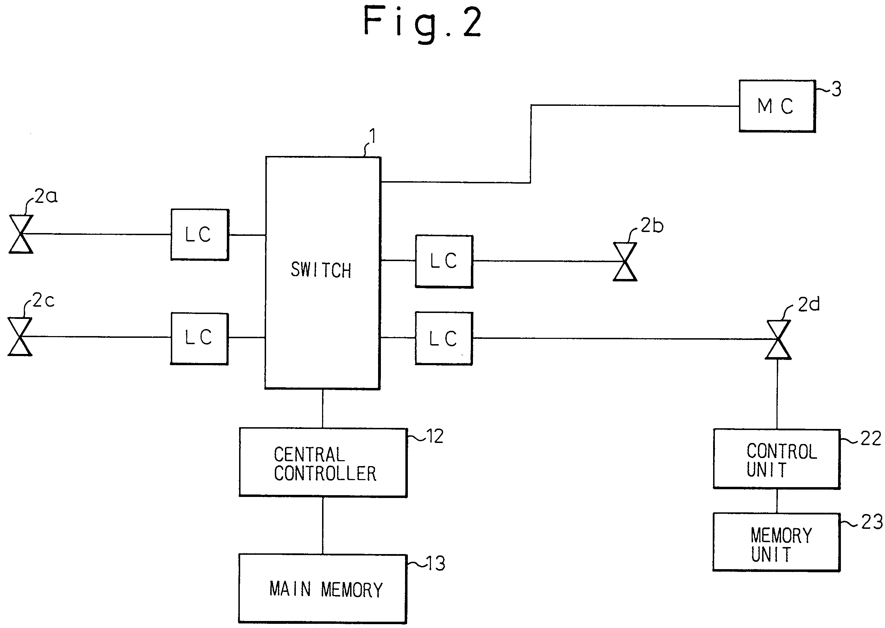

Figure 2 is a view of the call registration system for personal communication services according to an embodiment of the present invention. In the figure, 1 is a switch. To the switch 1 are connected communication terminals 2a, 2b, 2c, 2d... through subscriber circuits (LC). A maintenance console (MC) 3 is connected for registration, change, deletion, etc. of internal data (data of switch). Here, the switch 1 is comprised of a central controller (CC) 12 and a main memory (MM) 13. Further, the terminals 2 are comprised of control units 22 and memories 23.

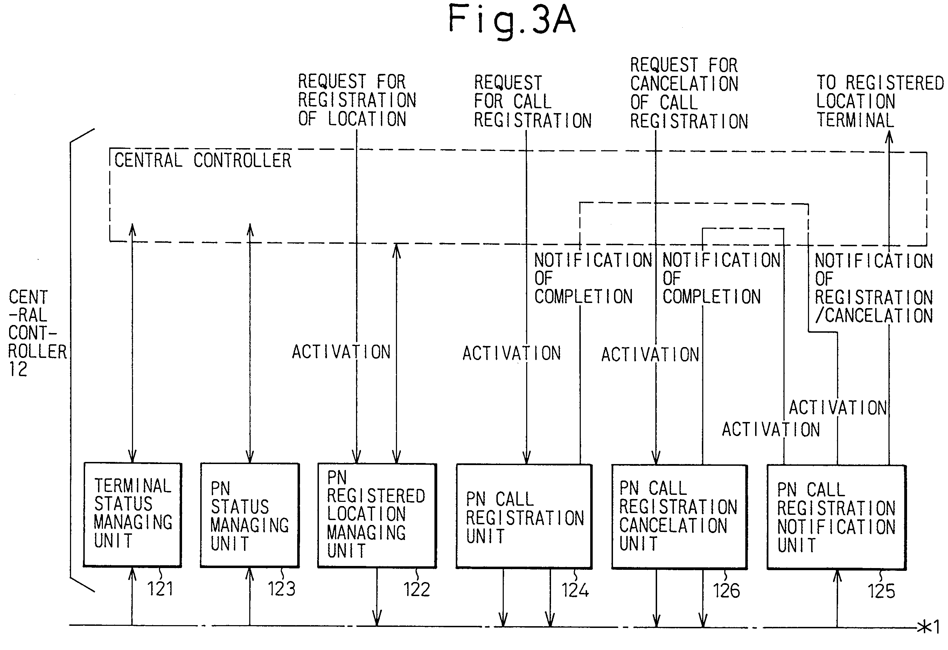

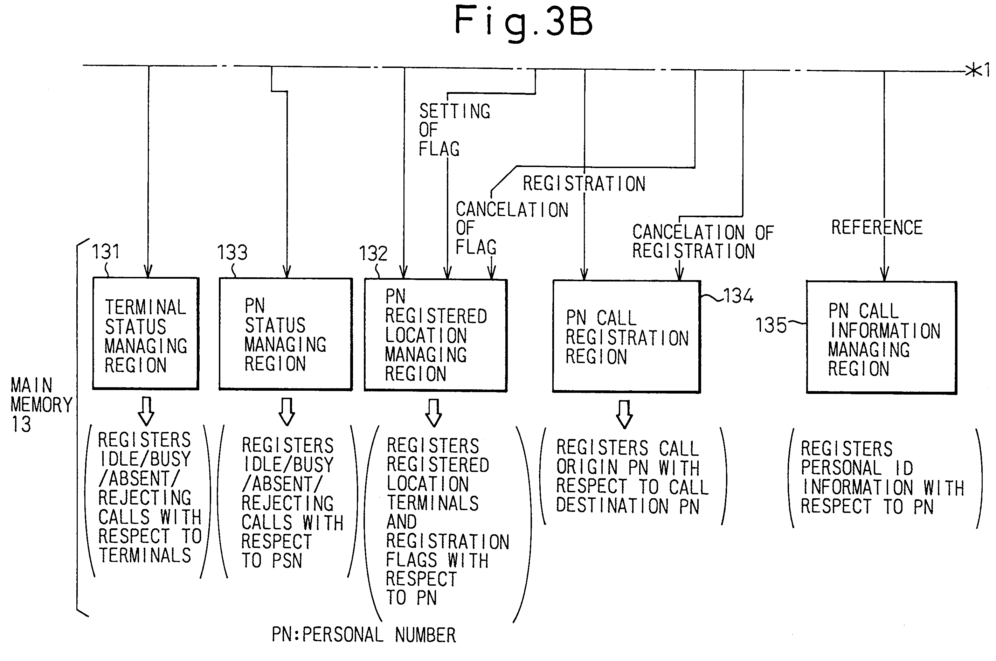

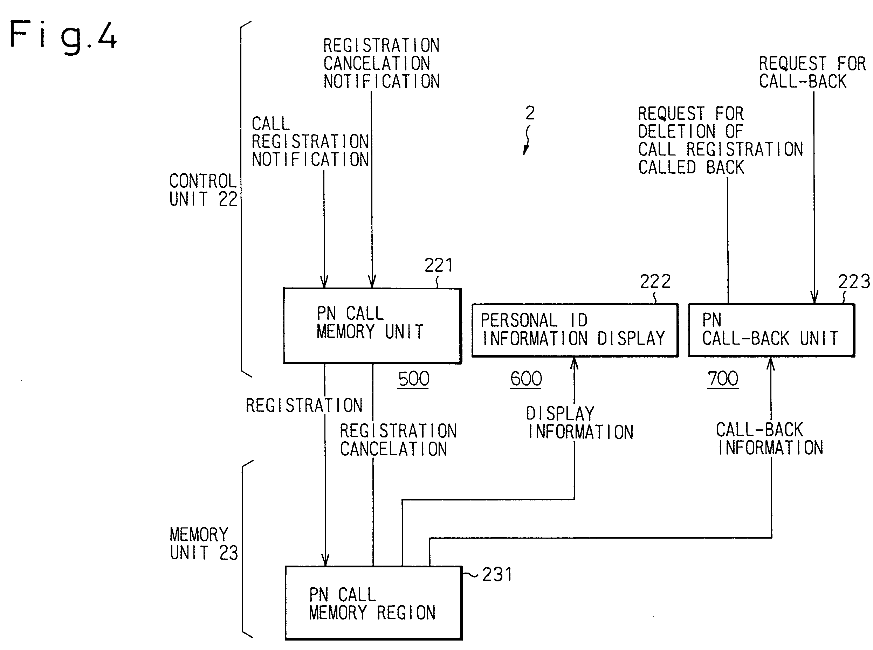

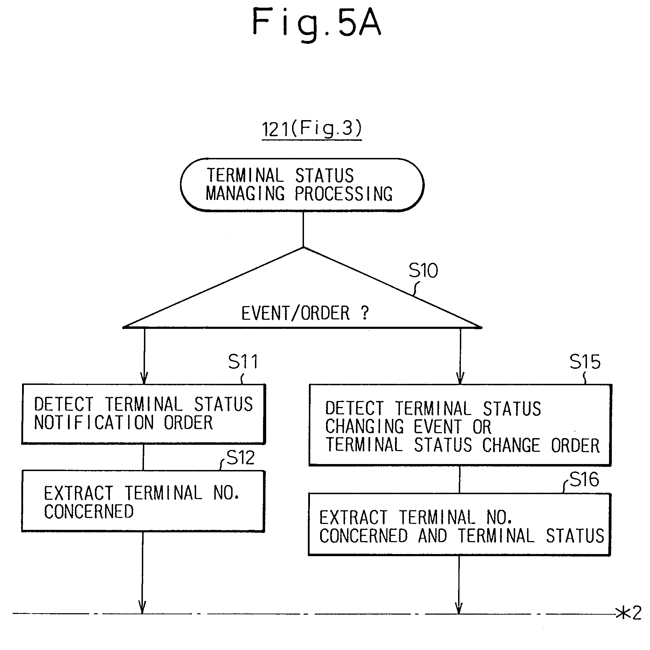

Figures 3A and 3B show the configuration of the central controller 12 by functional blocks. As illustrated, there are provided a personal number registered location managing unit 122 and personal number registered location region 132 as the personal number registered location managing means 100, a personal number status managing unit 123 and personal number status managing region 133 as the personal number status managing means 150, a personal number call registration unit 124 and personal number call registration region 134 as the personal number call registering means 200, a personal number call registration 125 as the personal number call registration notifying means 300, a personal number call registration cancelation unit 126 as the personal number call registration canceling means 400, a terminal status managing unit 121 and terminal status managing region 131 for managing the status of the communication terminals accommodated (idle, busy, initializing, faulty, absent, rejecting calls, etc.), and a personal number information managing region 135 for managing personal identification information of the personal number subscriber (name, affiliation, etc.)

Figure 4 shows the configuration of the communication terminal 2 by functional blocks. As illustrated, there are provided a personal number call memory unit 221 and personal number call memory region 231 as the call origin information memory means 500, a personal identification information display 222 as the call origin information display means 600, and a personal number call-back unit 223 as the call origin call-back means 700.

These components will be explained in further detail below.

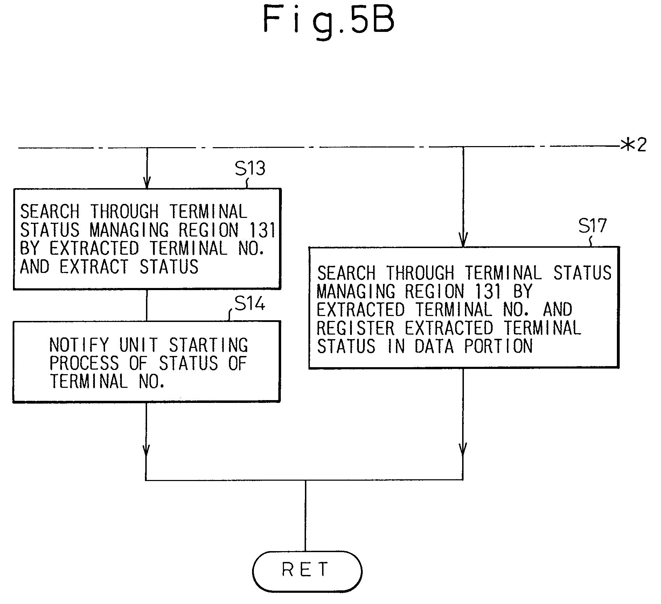

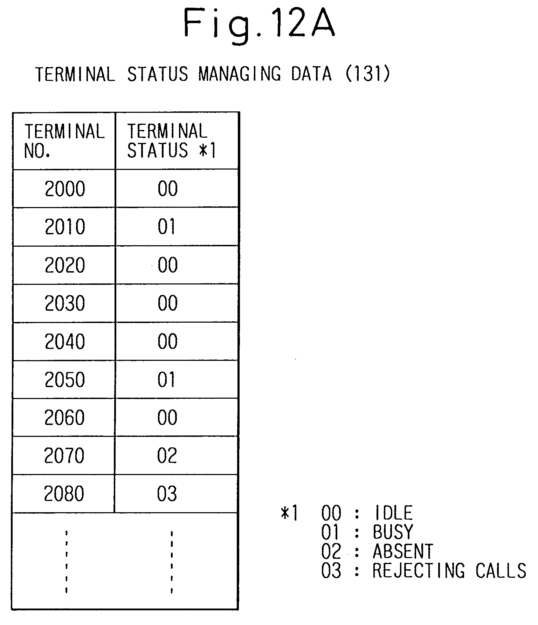

Figures 5A and 5B are flow charts of the processing of the terminal status managing unit 121 (Fig. 3). Figure 12A shows the structure of the data in the terminal status managing region 131. The terminal status managing unit 121 manages the status of the terminals (idle, busy, absent, rejecting calls, etc.) in the terminal status managing region 131.

The terminal status managing region 131, as shown in Fig. 12A, is a memory table which stores the terminal status with respect to numbers of the communication terminals. The terminal status is indicated by, for example, "00" for idle, "01" for busy, "02" for absent, and "03" for rejecting calls.

The processing in the terminal status managing unit 121, as shown in Figs. 5A and 5B, is as follows: When receiving a terminal status notification order inquiring about the status of a terminal from the central controller 12 (step S11), the unit extracts from the notification order the terminal number concerned (step S12), uses the extracted terminal number to search through the terminal status managing region 131 and extract the terminal status of the terminal number (step S13), and notifies the status of the terminal of the number request to the central controller 12 which started the process (step S14).

On the other hand, when receiving a terminal status change event notifying a change of the terminal status, or a terminal status change order requesting a change in the terminal status from the central controller 12 (step S15), the unit extracts from the change event or change order the terminal number concerned and the terminal status of the same (step S16), and uses the extracted terminal number to search through the terminal status managing region 131 and store the terminal status notified by the change event or change order in the terminal status data portion with respect to the extracted terminal number (step S17).

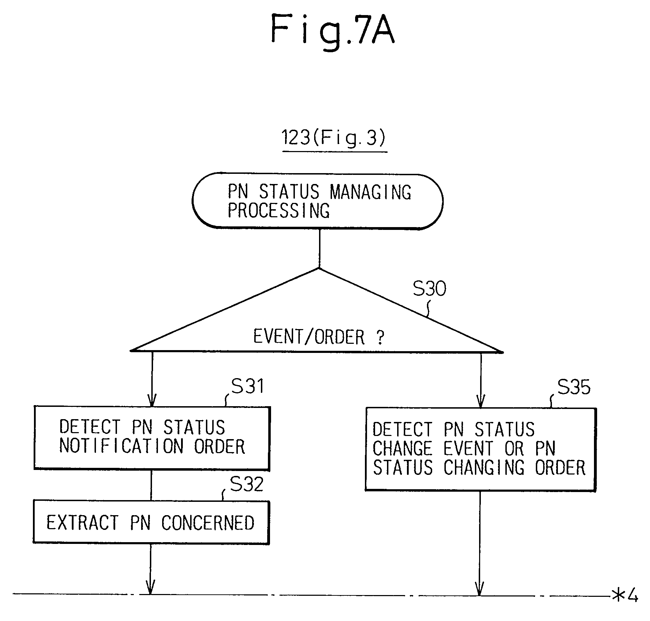

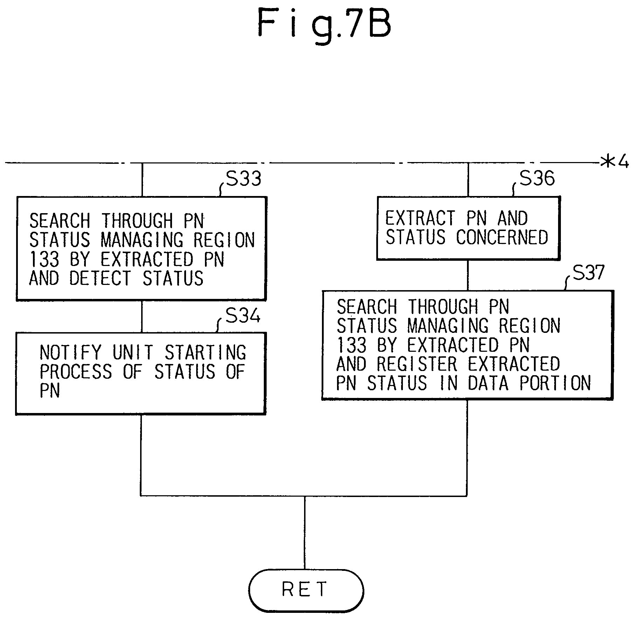

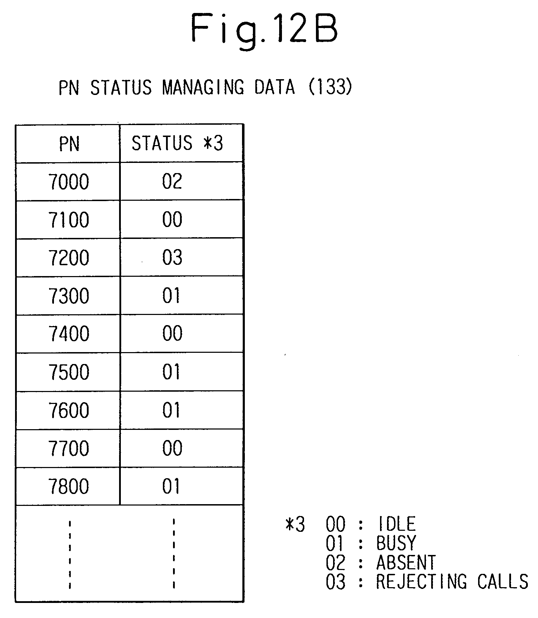

Figures 7A and 7B are flow charts of the processing of the personal number status managing unit 123. Further, Fig. 12B shows the structure of data of the personal number status managing region 133. The personal number status managing unit 123 manages the status of the personal number subscriber (idle, busy, absent, rejecting calls, etc.) in the personal number status managing region 133.

The personal number status managing unit 123, as shown in Fig. 12B, is a memory table for storing the status of the personal number subscribers with respect to the numbers of the personal number subscribers. The status is indicated for example by "00" for idle, "01" for busy, "02" for absent, and "03" for rejecting calls.

The processing at the personal number status managing unit 123, as shown in Figs. 7A and 7B, is as follows: When receiving a status notification order inquiring over the status of a personal number from the central controller 12 (step S31), the unit extracts from the notification order the personal number concerned (step S32), uses the extracted personal number to search through the personal number status managing region 133 and extract the status of the personal number (step S33), and notifies the status of the personal number requested to the central controller 12 starting the process (step S34).

On the other hand, when receiving a status change event notifying a change of the personal number status or a status change order requesting a change in the personal number status from the central controller 12 (step S35), the unit extracts from the change event or change order the personal number concerned and the personal number status of the same (step S36) and uses the extracted personal number to search through the personal number status managing region 133 and records the personal number status notified by the change event or change order in the status data portion with respect to the extracted personal number (step S37).

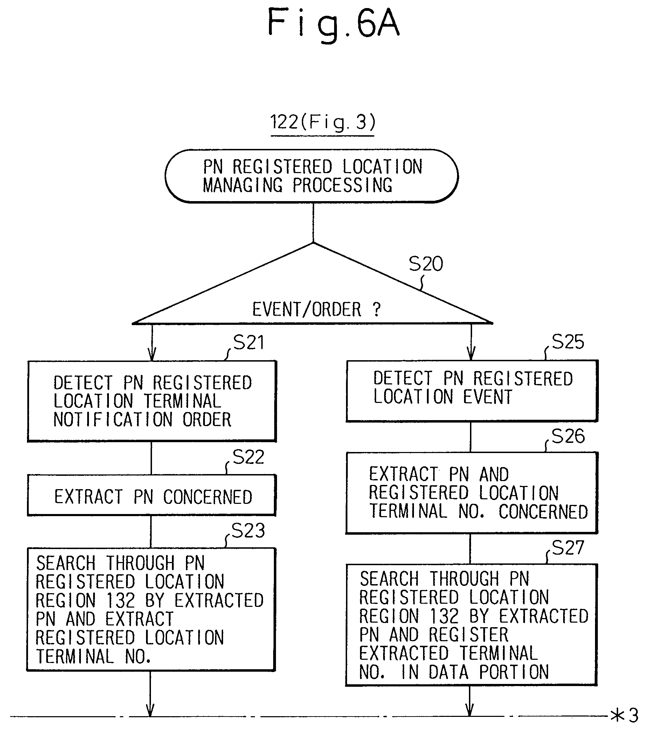

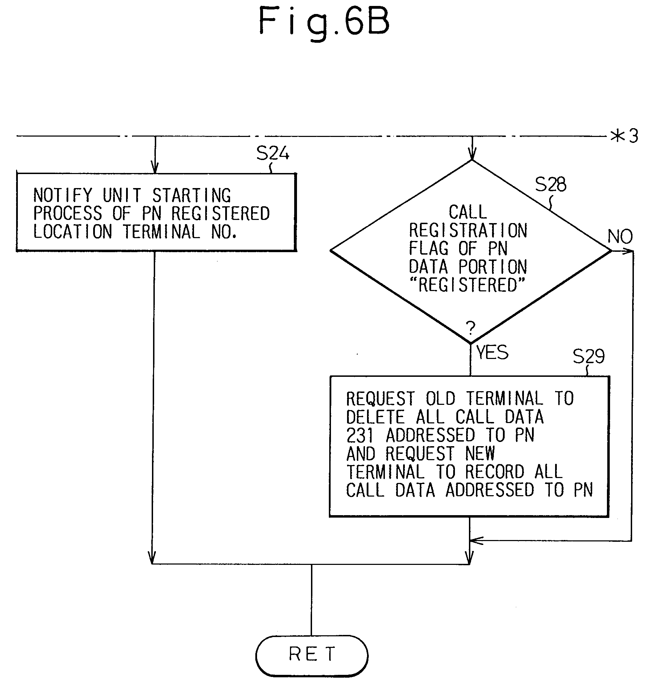

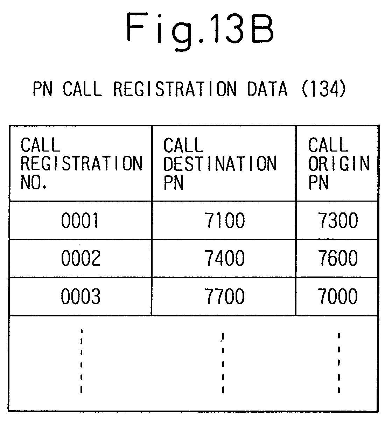

Figures 6A and 6B are flow charts of the processing of the personal number registered location managing unit 122. Further, Fig. 13B shows the structure of data of the personal number registered location managing region 132. The personal number registered location managing unit 122 uses the personal number registered location region 132 to manage the registered location communication terminals of the personal number subscribers and whether calls are registered for those personal number subscribers.

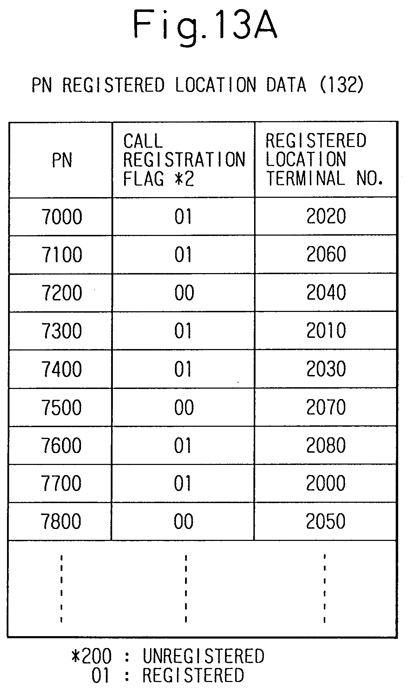

The personal number registered location managing unit 122, as shown in Fig. 13A, is a memory table storing call registration flags for the personal numbers corresponding to the personal numbers and the numbers of the registered location communication terminals of the personal number subscribers. Here, the call registration flags indicate no calls registered when "00" and calls registered when "01". Note that when a number of call registrations are allowed for a single personal number, provision may be made of a counter N for a number N of registrations instead of the 00/01 flag.

The processing at the personal number registered location managing region 132, as shown in Figs. 6A and 6B, is as follows: When receiving a registered location terminal notification order inquiring over the registered location communication terminal of a personal number from the central controller 12 (step S21), the unit extracts from the notification order the personal number concerned (step S22), uses the extracted personal number to search through the personal number registered location managing region 132 and extract the number of the registered location communication terminal (step S23), and notifies the number of the registered location communication terminal requested to the central controller 12 starting the process (step S24).

On the other hand, when receiving a registered location event notifying a registered location of the personal number from the central controller 12 (step S25), the unit extracts from the registered location event the personal number concerned and the number of the registered location communication terminal of the personal number (step S26), and uses the extracted personal number to search through the personal number registered location region 132 and store the number of the registered location communication terminal notified by the registered location event in the terminal number data portion with respect to the extracted personal number (step S27). Further, it judges if the call registration flag of the extracted personal number indicates "registered" (step S28) and if indicating "registered", requests to the previous communication terminal (communication terminal before move) the deletion of all of the call data (231) addressed to the personal number and requests to the new communication terminal (communication terminal after move) the registration of all the call data addressed to the personal number (step S29).

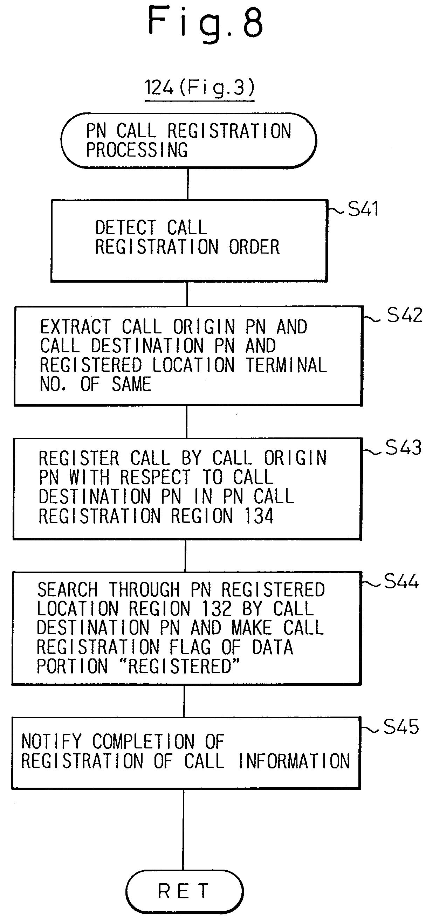

Figure 8 is a flow chart of the processing of the personal number call registration unit 124. Further, Fig. 13B shows the structure of data of the personal number call registration region 134. The personal number call registration unit 124 manages the call registrations using the personal number call registration region 134.

The personal number call registration region 134, as shown in Fig. 13B, is a memory table for storing the call origin personal number registered as calling with respect to the call destination personal numbers.

The processing at the personal number call registration region 134, as shown in Fig. 8, is as follows: When receiving a call registration order requesting registration of a call from the central controller 12 (step S41), it extracts from the registration order the call origin personal number and call destination personal number (step S42) and registers the call origin personal number as calling with respect to the call destination personal number in the personal number call registration region 134 (step S43). Further, it uses the extracted call destination personal number to search through the personal number registered location registration region 132 and make the call registration flag of that data portion "registered" (step S44), then notifies the completion of registration of the call information to the unit starting the process (step S45).

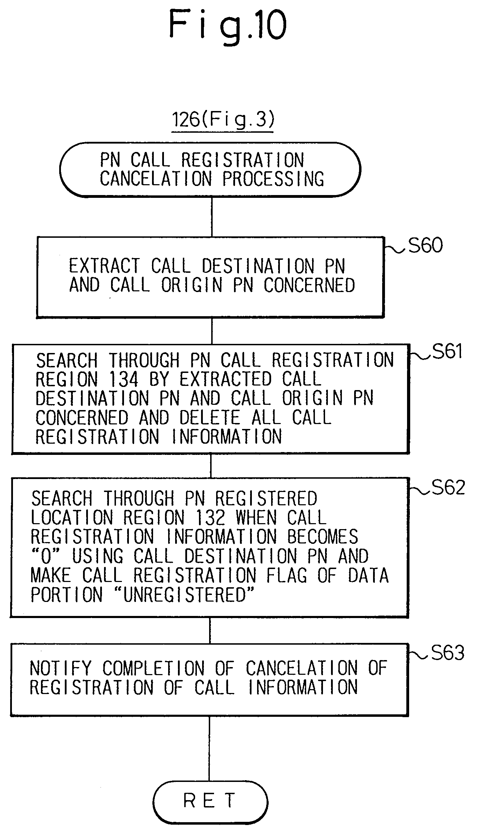

Figure 10 is a flowchart of the processing in the personal number call registration cancelation unit 126 (Fig. 3). The personal number call registration cancelation unit 126 is for deleting the call data registered in the personal number call registration region 134 and canceling the registered flag in the personal number registered location region 132 corresponding to the same.

That is, when the unit receives a request for cancelation of call registration from the central controller 12 side, it extracts from the request the call destination personal number and the call origin personal number concerned (step S60), searches through the personal number call registration region 134 by the extracted call destination personal number and call origin personal number concerned and deletes all corresponding call information (step S61), and, if there is no longer call information as a result of the deletion, searches through the personal number registered location region 132 by the call destination personal number and makes the corresponding call registration flag "unregistered" (step S62). Next, it notifies the unit starting the process (central controller 12) of the completion of the cancelation of the registration of the call information (step S63).

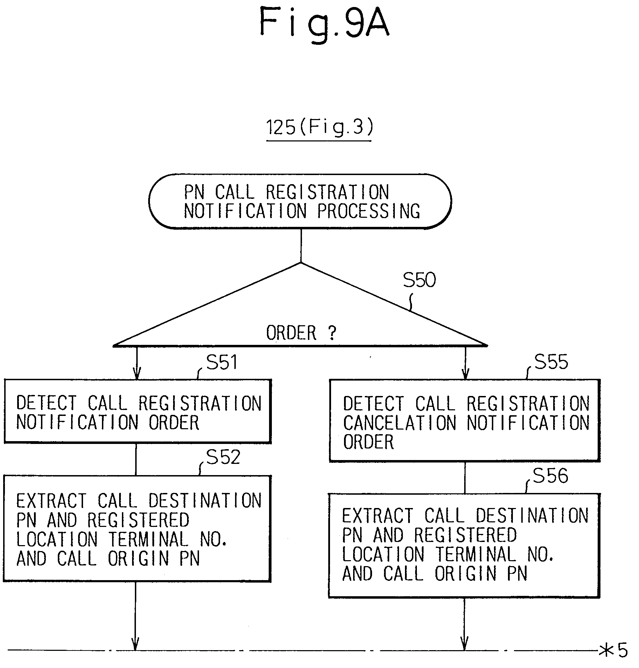

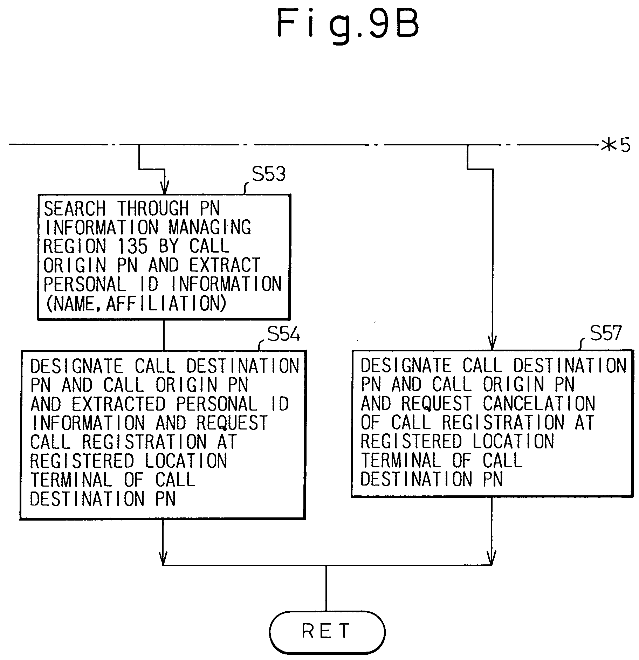

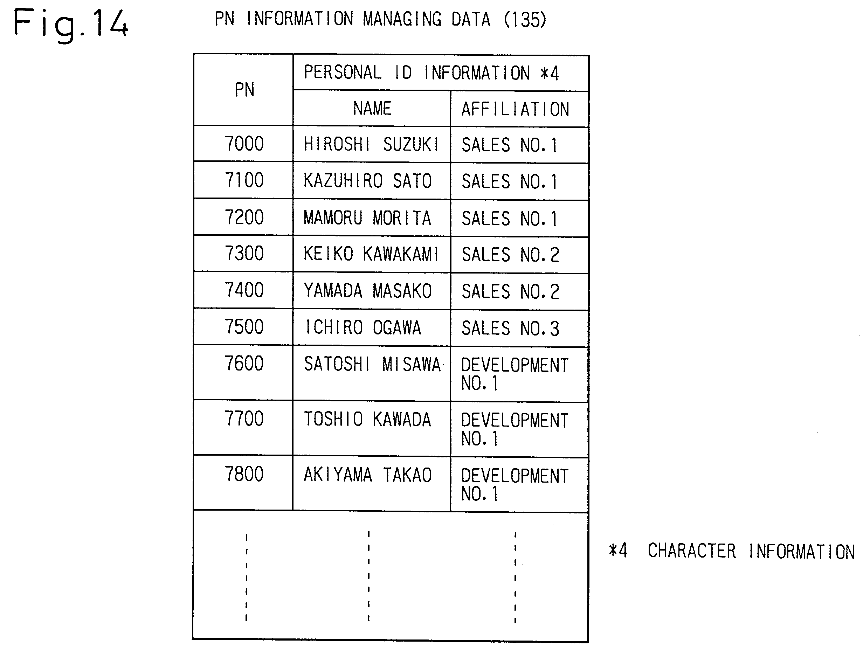

Figures 9A and 9B are flowcharts of the processing in the personal number call registration notification unit 125 (Fig. 3). Figure 14 shows the structure of the data of the personal number information managing region 135. When receiving the notification of call registration or cancelation of registration, the unit 125 refers to the personal number information managing region 135, acquires the personal identification information pertaining to the call, and requests to the registered location communication terminal corresponding to the call the call registration or cancelation of registration along with that information.

The personal number information managing region 135, as shown in Fig. 14, is a memory table which stores the name, affiliation, and other personal identification information of the personal number subscriber with respect to the personal number.

The processing at the personal number information managing region 135, as shown in Figs. 9A and 9B, is as follows: When receiving a registration notification order from the unit starting the process (central controller 12 etc.) for notification that the call has been registered by the personal number call registration unit 124 (step S51), the unit extracts from the registration notification order the call destination personal number and the number of its registered location communication terminal and the call origin personal number, uses the call origin personal number to search through the personal number information managing region 135 and extract the personal identification information of the call origin personal number (name, affiliation) (step S53), and requests to the registered location communication terminal of the call destination personal number the registration of the call designating the extracted personal identification information along with the call destination personal number and the call origin personal number (step S54).

On the other hand, when receiving a registration cancelation notification order from the unit starting the process for notification that the call registration has been canceled by the personal number call registration cancelation unit 126 (Fig. 3) (step S55), the unit extracts from the registration cancelation notification order the call destination personal number and the number of its registered location communication terminal and the call origin personal number (step S56), and requests deletion of the call registration to the registered location communication terminal of the call destination personal number designating the call destination personal number and call origin personal number among the same (step S57).

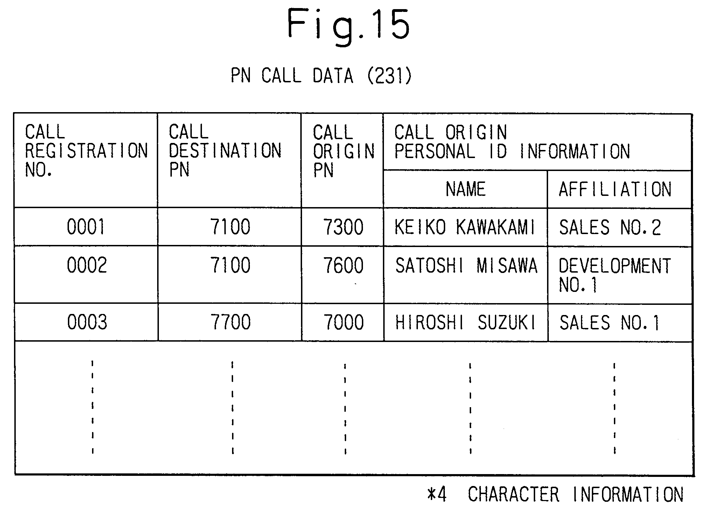

When receiving a notification of call registration or cancelation of registration from the exchange side 1, the personal number call memory unit 221 (Fig. 3) of the communication terminal 2 side uses the personal number call memory region 231 at the communication terminal side as well to register the call or cancel the registration. Figure 15 shows the structure of data of the personal number call memory region 231. As illustrated, the personal number call memory region 231 is a memory table which stores the call origin personal number and call origin personal identification information corresponding to the call receiving personal number.

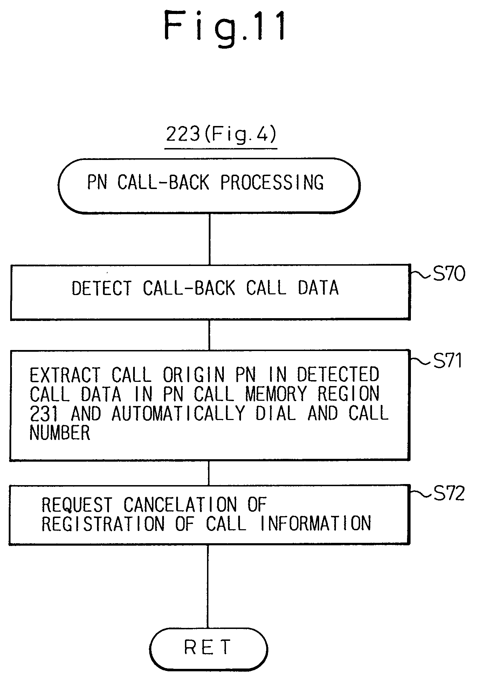

Figure 11 is a flowchart of the processing in the personal number call-back unit 223 (Fig. 4) at the communication terminal side. When receiving a call-back request from the unit starting the process (control unit 22), the personal number call-back unit 223 detects the call data of the call-back from the request (step S70), then uses this to extract the call origin personal number in the detected call data in the personal number call memory region 231 and automatically dials and calls the same (step S71), then requests deletion of the registration of the call information to the controller 22 (step S72).

An explanation will now be made of call registration at the exchange side.

Here, assume that the personal number A is registered as being located at the communication terminal 2a (Fig. 1) and the personal number B at the communication terminal 2b. If the personal number B subscriber uses the communication terminal 2b at which it is registered as being located to make a call, the terminal status managing unit 121 (Fig. 3) makes the status of the communication terminal 2b at the terminal status managing region 131 (Fig. 3) "busy" and the personal number status managing unit 123 (Fig. 3) makes the status of the personal number B at the personal number status managing region 133 "busy".

If the personal number B is designated and dialed from the communication terminal 2a which the personal number A is registered as being located at, the central controller 12 analyzes the number and identifies it as a call to the personal number B. The personal number registered location managing unit 122 uses the call destination personal number B to refer to the personal number registered location managing region 132 and extracts the fact that the communication terminal at which the personal number B is registered as being located is the communication terminal 2b. Due to this, the personal number status managing unit 123 refers to the personal number status managing region 133 to extract the fact that the status of the personal number B is "busy" and the terminal status managing unit 121 refers to the terminal status managing region 131 to extract the fact that the status of the communication terminal 2b is "busy". Accordingly, it is judged that the call from the personal number A cannot be received.

The central controller 12 sends a busy tone to the call origin communication terminal 2a which the personal number A is registered as being located at since the personal number B and the registered location communication terminal 2b are busy and cannot be connected to. At this time, if the caller performs a predetermined operation for call registration from the call origin communication terminal 2a (for example, hangs up, then accesses a special number for instructing call registration) to issue a request for call registration, the central controller 12 detects the request for call registration, activates the personal number call registration unit 124, and transmits to the personal number call registration unit 124 the call origin personal number A, the call destination personal number B, and the registered location communication terminal 2b of the personal number B.

Here, the predetermined operation for call registration from the call origin communication terminal 2a is allowed not only as mentioned above when the personal number subscriber B is using the registered location communication terminal 2b, but also when the call destination communication terminal 2b is being used by a subscriber other than the personal number B or when the communication terminal 2b is being called, but no response is made. In other words, the above call registration operation is possible for the call destination personal number B even in a state where the status of the personal number B in the personal number managing region 133 is "idle", the status of the registered location communication terminal 2b in the terminal status managing region 131 is "busy/absent/rejecting calls", etc., and therefore a busy tone/service tone is sent by the central controller 12 to the call origin terminal 2a; a state where the status of the personal number B in the personal number status managing region 133 is "idle", the status of the registered location communication terminal 2b in the terminal status managing region 131 is "idle", and the call destination communication terminal 2b is called by the central controller 12 and a ringback tone is connected to the call origin communication terminal 2a, etc.

The activated personal number call registration unit 124 (Fig. 3) registers the call origin personal number A for the call destination personal number B in the personal number call registration region 134 and sets the call registration flag of the personal number B in the personal number registered location region 132 to the "registered" status to thereby complete the call registration, then notifies the completion of the registration to the central controller 12.

When receiving the notification of completion of the registration, the central controller 12 activates the personal number call registration notification unit 125, transmits to the personal number call registration notification unit 125 the call origin personal number A and call destination personal number B and the registered location communication terminal 2b of the personal number B, and requests call registration to the corresponding registered location communication terminal.

The activated personal number call registration notification unit 125 (Fig. 3) refers to the personal number information managing region 135 (Fig. 3) to extract the personal identification information (name, affiliation, etc.) of the call origin personal number A, designates the call destination personal number B and call origin personal number A, and notifies the same together with the extracted personal identification information to the registered location communication terminal 2b of the call destination personal number B.

An explanation will now be made of call registration at the registered location communication terminal.

In the registered location terminal 2b of the call destination personal number B receiving the notification of the call registration, first, the personal number call memory unit 221 (Fig. 4) registers the call origin personal number A with respect to the call destination personal number B and personal identification information of the personal number A based on the received data in the personal number call memory region 231.

An explanation will now be made of the display of the call at the registered location communication terminal and the automatic call-back.

The personal identification information display 222 (Fig. 4) displays, out of the call information registered at the personal number call memory region 231, the personal identification information (name, affiliation, etc.) of the call origin personal number A together with the indication of "existence" of a call at the display of the terminal 2b. At this time, if the party performs a predetermined call operation designating the personal identification information of the call origin personal number A displayed by the personal identification display 222 (for example, selects the personal identification information by the telephone buttons and pressing the call button) to request call-back, the control unit 2 detects the call-back request and activates the personal number call-back unit 223.

The activated personal number call-back unit 223 (Fig. 4) extracts from the corresponding call information registered at the personal number call memory region 231 the personal number A of the selected personal identification information (call origin personal number), automatically dials this, and simultaneously requests deletion of the call information of the call destination personal number B and call origin personal number A to the central controller 12.

By the above processing, the personal number subscriber B registered as located at the communication terminal 2b is able to learn of registration of a call from the personal number subscriber A from the display of the communication terminal 2b and is able to easily call back that subscriber.

An explanation will now be made of cancelation of call registration.

Assume now that in the above state, that is, the state where the call origin personal number A is registered as having called the call destination personal number B in the personal number call registration region 134 and the call origin personal number A and personal identification information of the personal number A are registered as having called the call destination personal number B in the personal number call memory region 221 of the registered location communication terminal 2b of the personal number B, there is a request from the call origin personal number A to cancel the call registration by the party performing a predetermined operation to cancel the call registration (for example, accessing a special number for cancelation of call registration and a call destination personal number). If this is done, the central controller 12 detects the request for cancelation of the call registration, activates the personal number call registration cancelation unit 126 (Fig. 3), and transmits to the personal number call registration cancelation unit 126 the call origin personal number A inputting the cancelation of registration and the call destination personal number B designated for the cancelation. Note that the central controller 12 performs a similar processing even when receiving a request for cancelation of call registration from the above personal number call-back unit 223 (Fig. 4).

The activated personal number call registration cancelation unit 126 (Fig. 3) searches for the call registration of the call destination personal number B and call origin personal number A in the personal number call registration region 134 and deletes all of the corresponding call information. When as a result there is no longer any call information of the personal number B, it makes the call registration flag of the personal number B "unregistered" in the personal number registered location region 132 to thereby complete the cancelation of the call registration and notifies the completion of the cancelation of registration to the central controller 12.

When receiving the notification of completion of the cancelation of registration, the central controller 12 activates the personal number call registration notification unit 125, transmits to the personal number call registration notification unit 125 the call origin personal number A, call destination personal number B, and registered location communication terminal 2b of the personal number B for which the registration was canceled, and requests to the registered location communication terminal of the call destination personal number the deletion of the call registration.

The activated personal number call registration notification unit 125 notifies the registered location communication terminal 2b of the call destination personal number B of the deletion of the call registration of the call destination personal number B and call origin personal number A.

At the registered location communication terminal 2b of the call destination personal number B receiving the notification of cancelation of call registration, the personal number call memory unit 221 searches through the personal number call memory region 231 using the received call destination personal number B and call origin personal number A and deletes the call destination personal number B and call origin personal number A and the personal identification information of the personal number A of the call information.

The change of the communication terminal at which a call destination personal number is registered as being located will next be explained.

If the personal number subscriber B registers the location of the call destination personal number B from the communication terminal 2d in the state where the registered location communication terminal 2b and the call origin personal number A are registered for a call for the call destination personal number B at the personal number call registration region 134 (Fig. 3) and where the call origin personal number A and personal identification information of the personal number A are registered for a call for the call destination personal number B at the personal number call memory region 231 in the registered location communication terminal 2b of the personal number B, the central controller 12 detects the request for registration of location, activates the personal number registered location managing unit 122 (Fig. 3), and transmits to the personal number registered location managing unit 122 the personal number B and the registered location communication terminal 2d.

The activated personal number registered location managing unit 122 changes the registered location communication terminal of the personal number B from the communication terminal 2b to the communication terminal 2d and makes the communication terminal 2b the previous registered location communication terminal in the personal number registered location registration region 132. At this time, if the call registration flag of the personal number B indicates "registered", it is necessary to delete the corresponding call registration at the previous registered location communication terminal 2b and re-register the call at the new registered location communication terminal 2d, so the fact that the destination for notification of the call registration of the personal number B was changed from the communication terminal 2b to the communication terminal 2d is notified to the central controller 12.

Next, the central controller 12 activates the personal number call registration notification unit 125, transmits to the personal number call registration notification unit 125 (Fig. 3) the call origin personal number A and call destination personal number B and the new registered location communication terminal 2d of the personal number B and requests registration of the call registration at the new registered location communication terminal 2d, and transmits to the personal number call registration notification unit 125 the call origin personal number A and call destination personal number B and the registered location communication terminal 2b of the personal number B just before and requests cancelation of the corresponding call registration at the previous registered location communication terminal 2b.

The processing in the activated personal number call registration notification unit 125 after the processing for notifying call registration to the new registered location communication terminal 2d of the call destination personal number B and the processing after the processing for notifying cancelation of call registration to the previous registered location communication terminal 2b of the call destination personal number B are the same as explained previously.

By the above processing, the personal number subscriber B registered as being located at the communication terminal 2b can learn that a call was registered from the personal number subscriber A by the display of the new communication terminal 2d after changing the registered location communication terminal to the communication terminal 2d and can easily call back the party originating the call registration.

Application to a shared communication terminal for which several personal number subscribers register themselves as being located will be explained next.

When the personal number call registration notification unit 125 (Fig. 3) notifies the registered location communication terminal 2b of the call destination personal number B of a call registration, it extracts the personal identification information of the call destination personal number B from the personal number information managing region 135 in addition to the above-mentioned information and notifies the same. At the communication terminal 2b receiving this, the personal number call memory unit 221 (Fig. 4) stores the information in the personal number call memory region 231 (Fig. 4) and the personal identification information display 222 displays this personal identification information of the call destination personal number in addition to the personal identification information of the call origin personal number. If this is done, then which personal number subscriber the call registration is from becomes clear and therefore the call registration service becomes usable even at shared communication terminals where several personal number subscribers are registered as being located.

Other modifications will be discussed below:

When the exchange system 1 provides electronic mail services for personal numbers, whenever electronic mail is received for a personal number, the personal number call registration unit 124 registers the incoming electronic mail in the personal number call registration region 134 in the same way as notification of the call registration for a telephone call and the personal number call registration notification unit 125 notifies the communication terminal of the registered location of the incoming electronic mail.

The communication terminal may also be a pager or other portable wireless communication device.

Note that the personal identification information of the personal number subscribers in the personal number information managing region 135 is input in advance from a maintenance console (MC) 3 connected to the exchange 1 and can be registered, changed, or deleted from the maintenance console as well.

As clear from the above explanation, according to the present invention, it is possible to provide an automatic call-back service which enables call registration, cancelation, notification, and call-back based on personal numbers in personal communication services. That is, even if the communication terminal of the registered location is frequently changed, there is no need for an operation to change the call registration accompanying that change. It is possible to provide a flexible automatic call-back service just by an operation to register the location (register use) in an ordinary communication terminal in personal communication services. Further, registration of several calls is possible for any personal number. In addition, this is effective for automatic call-back services in cases where several personal numbers are registered as being located at a shared communication terminal.

As explained above, according to the present invention, it becomes possible to register calls corresponding to personal numbers designating specific individuals rather than corresponding to communication terminals and to automatically call back the same. Accordingly, it is possible to make use of services designating specific individuals not limited to specific communication terminals, but at locations to which the personal number subscribers have moved, without requiring any special operations, and therefore the convenience of the exchange system is enhanced.

## Claims

1. A call registration system for personal communication services which
provides at the exchange side
personal number registered location managing means (100) for managing information on communication terminals for which personal numbers are registered as being located at,
personal number call registering means (200) for receiving requests for registration and registering a call origin personal number A with respect to a call destination personal number B as call information, and
personal number call registration notifying means (300) for notifying information pertaining to a registered call origin personal number to a registered location communication terminal of the call destination personal number, obtained by searching through the managing means and
provides, at the communication terminals,
call origin information memory means (500) for storing information pertaining to call origin personal numbers which have been notified as registered and
call origin information display means (600) for displaying information pertaining to the call origin personal numbers.

2. A call registration system as set forth in claim 1, wherein
the call registration system is further provided with personal number call registration canceling means (400) for deleting the call information registered by the personal number call registering means (200) when receiving a request for cancelation of registration by a predetermined cancelation operation,
the personal number call registration notifying means (300) notifies the registered location communication terminal of the call destination personal number of the deletion of the information pertaining to the call origin personal number with respect to the call information deleted by the personal number call registration canceling means (400), and
the call origin information memory means (500) deletes the information pertaining to the call origin personal number for which deletion was notified by the personal number call registration notifying means (300).

3. A call registration system as set forth in claim 2, wherein when there is a change in the registered location communication terminal of the call origin personal number in the personal number registered location managing means (100), the personal number call registration notifying means (300) notifies the previous registered location communication terminal, of before the change of the call origin personal number, of the deletion of information pertaining to the registered call origin personal number and notifies the new registered location communication terminal, of after the change, of the information pertaining to the registered call origin personal number.

4. A call registration system as set forth in any one of claims 1 to 3, wherein further provision may be, at the communication terminals, of call origin call-back means (700) for automatically dialing and calling back the call origin personal number using personal identification display information selected or personal identification information stored in the call origin information memory means when the party to be called back is selected based on the display information of call origin personal numbers by the call origin information display means.

5. A call registration system as set forth in claim 4, wherein the call origin call-back means (700) is constructed to request cancelation of a call registration after calling back the call origin personal number.

6. A switch of a call registration system for personal communication services comprised of
personal number registered location managing means (100) for managing information on communication terminals for which personal numbers are registered as being located at,
personal number call registering means (200) for receiving requests for registration and registering a call origin personal number A with respect to a call destination personal number B as call information, and
personal number call registration notifying means (300) for notifying information pertaining to a registered call origin personal number to a registered location communication terminal of the call destination personal number, obtained by searching through the managing means.

7. A switch of a call registration system for personal communication services as set forth in claim 6, wherein
further provision is made of personal number call registration canceling means (400) for deleting the call information registered by the personal number call registering means (200) when receiving a request for cancelation of registration due to a predetermined cancelation operation,
the personal number call registration notifying means (300) notifies the registered location communication terminal of the call destination personal number of the deletion of the information pertaining to the call origin personal number corresponding to the call information deleted by the personal number call registration canceling means (400).

8. A switch of a call registration system as set forth in claim 7, wherein when there is a change in the registered location communication terminal of the call origin personal number in the personal number registered location managing means (100), the personal number call registration notifying means (300) notifies the previous registered location communication terminal, of before the change of the call origin personal number, of the deletion of information pertaining to the registered call origin personal number and notifies the new registered location communication terminal, of after the change, of the information pertaining to the registered call origin personal number.

9. A communication terminal of a call registration system for personal communication services comprised of
call origin information memory means (500) for storing information pertaining to call origin personal numbers which have been notified as registered by a personal number call registration notifying means for notifying information pertaining to a registered call origin personal number to a registered location communication terminal of the personal number and
call origin information display means (600) for displaying the information pertaining to the call origin personal numbers stored in the call origin information memory means (500).

10. A communication terminal of a call registration system for personal communication services as set forth in claim 9, wherein the call origin information memory means (500) deletes the information pertaining to the call origin personal number for which deletion was notified by the personal number call registration notifying means (300) when canceling a registration as a result of a predetermined operation for cancelation.

11. A communication terminal in a call registration system as set forth in any one of claims 9 to 10, wherein further provision is made of call origin call-back means (700) for automatically dialing and calling back the call origin personal number using personal identification display information selected or personal identification information stored in the call origin information memory means (500) when the party to be called back is selected based on the display information of the call origin personal number by the call origin information display means (600).

12. A communication terminal in a call registration system as set forth in claim 11, wherein the call origin call-back means (700) is constructed to request cancelation of a call registration after calling back the call origin personal number.
